# EUROPEAN PATENT SPECIFICATION

(11) **EP 1 813 148 B1**
(45) Date of publication and mention of the grant of the patent: **28.04.2010**
(21) Application number: 07101266.0
(22) Date of filing: 26.01.2007
(51) Int. Cl.: A01K 31/14

(54) **Nesting box**
Nistkasten
Nichoir

(30) Priority: 30.01.2006 FI 20060084
(43) Date of publication of application: 01.08.2007
(73) Proprietor: Kettunen Erkki, Tapio, 26100 Rauma (FI)
(72) Inventor: Kettunen Erkki, Tapio, 26100 Rauma (FI)
(74) Representative: LEITZINGER OY

(56) References cited:
- WO-A-01/15519
- DE-A1- 19 545 323
- GB-A- 2 347 604
- US-A- 2 230 305
- US-A- 3 198 172
- US-A- 3 250 249
- US-A1- 2005 132 972

## Description

At present, nesting boxes are made of wood, e.g. by nailing together boards of wood for a nesting box of desired size. Another implementation involves drilling a lengthwise hole through a piece of wood, followed by fixing a solid bottom plug and placing an overhead board for a roof. In both of the above, a further hole is of course drilled to provide a doorway for the bird.

A drawback with today's nesting boxes is the need of internal cleaning every year for the birds to repeat nesting in the same box. This cleaning is an awkward process as the bottom or top of the box must be opened to facilitate cleaning. In addition, upon decomposing, the entire box structure or a part of it may fall off the tree making it useless, and this fall usually happens when the box is occupied by a bird for nesting purposes, as a result of which the bird's eggs get broken and the nesting fails. Further, wood-frame nesting boxes are expensive to make, heavy to carry into the woods and bulky in terms of shipping space.

A general objective of this invention is to provide a nesting box, which is attractive in terms of its manufacturing costs, lightweight, and compact in shipping. Another general objective is to have the nesting box replaced often enough to avoid the need for its upkeep.

Patent publication US-6,170,437 discloses a variable-volume birdhouse, which is erectable from panels in such a way that clasps projecting from enclosure panels are insertable through locking holes present in the panels and lockable in position by means of locking members extending into slits included in the hook-like clasps. The structure requires weatherproof panels. This prior known birdhouse cannot be made sufficiently durable from cardboard or corrugated board, because the locking members and the clasps' slits are left exposed to elements, whereby the locking members are likely to fall off the respective slits as creeping occurs in the clasp material. Thus, the nesting may fail because of broken boxes.

Patent publication US 2005/132972 discloses a nesting box according to the preamble of claim 1.

It is an object of the invention to provide an improved nesting box, which can be constructed from corrugated board or other lightweight economical material while providing sufficient durability against the effects of weather.

This object is accomplished by the invention on the basis of the characterizing features set forth in the appended claim 1.

A nesting box of the invention is capable of providing a decisive improvement for the above drawback and achieving the above objectives. This is particularly based on the feature that the fasteners' holes and the locking members to be inserted therein are safely protected within the enclosure material.

As further benefits offered by the invention, it should be noted that the nesting box has its flight hole strengthened with a reinforcement, thus preventing birds or other animals from making the flight hole bigger. By virtue of the reinforcement, the flight hole retains its size, whereby nesting is safe explicitly for the bird species that the nesting box with this particular size hole is intended for use as a nesting place. Further, by virtue of an interchangeable flight hole reinforcement, the same nesting box enclosure can be used as a nesting place for various bird species by installing a reinforcement provided with the size of flight hole suitable for the relevant bird species, i.e. the interchangeable reinforcement is used for reducing the size of a flight hole present in the nesting box enclosure. The internal volume of a nesting box can also be made smaller by means of a separate volume reducer, which enables increasing the number of bird species willing to use a single size nesting box. The nesting box is attractive in terms of its manufacturing cost, it is lightweight and compact in shipping, as the nesting box is constructed from a thin material by cutting and by providing it with appropriate folding lines (creases, scores or perforation lines). The nesting box is most preferably constructed from some prior known cardboard, paperboard or other natural fiber material, typically from corrugated board. In a less preferred solution, the structure can also be set up by using materials that do not decompose, such as e.g. incinerable plastic materials. The nesting box is economical to construct by virtue of its rapid and simple manufacturing technique. The nesting box is sufficiently economical to make its annual replacement viable, whereby it does not require any upkeep and nesting does not fail because of broken boxes. The nesting box does not become excessively warm even in hot sunshine, because its surface colour can be selected to discourage warming. In addition, the box enclosure material does not store heat, as a result of which the box has a consistent internal temperature. It is obvious that major savings are achieved by the invention in providing nesting sites for birds.

The invention will now be described in detail with reference to the accompanying figures.
- Fig. 1: shows one nesting box enclosure of the invention as a flat panel in a so-called unfolded condition, viewed directly from the front.
- Fig. 2: shows the nesting box of fig. 1 in an assembled condition, viewed directly from the front and provided with a flight hole reinforcement and an internal volume reducer.
- Fig. 3: shows the nesting box of figs. 1 and 2 in an assembled condition, viewed directly from the side and provided with a flight hole reinforcement and an internal volume reducer.
- Fig. 4: shows the flight hole reinforcement of figs. 2 and 3, viewed directly from the front.
- Fig. 5: shows the flight hole reinforcement of figs. 2, 3 and 4, viewed directly from the side.
- Fig. 6: shows another flight hole reinforcement, viewed directly from the front.
- Fig. 7: shows the nesting box internal volume reducer of figs. 2 and 3 in a folded condition, viewed directly from the side.
- Fig. 8: shows the nesting box internal volume reducer of figs. 2, 3 and 7 in a folded condition, viewed directly from the front.
- Fig. 9: shows the nesting box internal volume reducer of figs. 2, 3, 7 and 8 in an unfolded condition, viewed directly from the front.

The figures depict the following components and aspects of a nesting box. An enclosure 1, featuring a front wall 1a, a base 1b, a rear wall 1c, a top 1d, side walls le, folding lines 1f, fastening elements 1h, and suspension elements 1i. The front section 1a is provided with a hole 1aa. The fastening element 1h comprises a slot 1ha in the enclosure 1 and a bracket (a tab or a lug) 1hb, protruding from the edge of the enclosure 1 and fitting in the slot 1ha in such a way that a hole 1hba present in the bracket 1hb is left within the material thickness of the enclosure 1. The hole 1hba functions as a clasp together with a locking member 2. A bracket 1ia for the suspension element 1i is a tab, which is folded from the enclosure panel's 1 edge and whose hole 1i, jointly with a hole 1i in the enclosure, makes up a suspension element. The locking member 2 is a wooden stick. A flight hole reinforcement 3 features a panel 3a, including a flight hole 3aa and an attachment element 3ab. Inside the box can be set a reducer 4, featuring a panel 4a which includes a base 4aa and a support 4ab.

The basic idea for a nesting box depicted in the figures is that most preferably a single panel of cardboard, which can be treated as known e.g. from milk or juice containers, is cut most preferably by a form cutter in a single cutting operation for the nesting box enclosure 1. As part of the cutting process or separately therefrom, the enclosure 1 can be provided with folding lines 1f, so-called creases or perforation lines, the nesting box enclosure 1 being thus provided with one or more folding lines 1f about which the nesting box is at least partially erectable. The folding line 1f consists of the same material as the enclosure 1.

According to one implementation variant of the invention, the nesting box comprises an enclosure 1, which consists of a so-called decomposing and/or incinerable material such as cardboard, decomposing in this context being used in reference to a material that decomposes in about a year. Depending on a desired bird species and a nesting box building material, the enclosure 1 may have a thickness of e.g. 1-12 mm.

Most preferably, the nesting box enclosure 1 consists of a single segment, less conveniently of several segments. The enclosure's 1 components, such as the front wall 1a, the base 1b, the rear wall 1c, the top 1d, and the side walls 1e, are at least over one side thereof in engagement with one of the above components. The top 1d is double-folded along a folding line 1f in the middle of a top panel. There are four folding lines crosswise to the elongated panel and lengthwise just two, the latter associated with the side walls 1e. The enclosure 1 is erectable by means of the fastening elements 1h, which are most preferably constituted by an edge bracket 1hb of the enclosure 1 and by a slot 1ha providing a seat for and receiving the bracket 1hb.

The illustrated fastening element 1h is constituted by a seat 1ha, which is a rectangular slot in the enclosure 1, and by a fastener 1hb, which in a lateral view is a rectangular bracket extending through the slot 1ha. The fastener 1hb features also a clasp 1hba, which is a hole having inserted therein a locking member 2 that can be something like a twig, a toothpick, a match or the like, thus preventing the fastener 1hb from slipping out of the seat 1ha. The fastener bracket 1hb is dimensioned so as to leave the clasp hole 1hba within the material thickness of the enclosure 1.

It is highly important that the locking members 2, holding the nesting box enclosure 1 in an assembled condition, are in a horizontal position when the nesting box is in a nesting position, whereby the locking members 2 are well capable of retaining their positions as gravity is unable to drop them off. The locking members 2 may become so-called loosened by the effects of weather, but in a horizontal position such members are well capable of holding their positions for the entire period that the nesting box is used. Further, the locking members 2 can be pushed into position so as to place themselves longitudinally within the enclosure's 1 material, e.g. in an air void present in corrugated board. This disposition of the locking member 2 ensures further the immobilization of the locking member 2.

Although not depicted in the figures, it is possible to use an impression technique or another similar technique for providing the interior of the enclosure 1 with stairs or the like, whereby nestlings can easily climb to the box opening without a slipping hazard.

After completing the form cutting of the enclosure 1 and the folding lines 1f, the nesting box is ready for shipping to the user. That is, the nesting box is delivered/sold in the form of a flat panel, from which the buyer erects it according to instructions, the erection process including the placement of a flight hole reinforcement 3 and optionally also an internal volume reducer 4 of the nesting box.

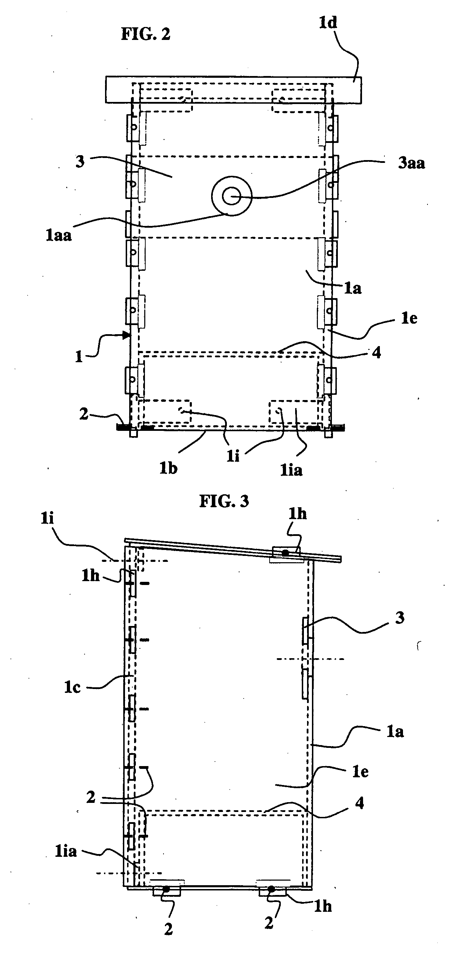

Figs. 2 and 3 indicate that the nesting box is provided with one or more reinforcements 3, featuring one or more holes 3aa for a bird to go in and out of the nesting box. The reinforcement 3 is a separate loose segment, which is mountable on the nesting box enclosure 1 for reinforcing a hole 1aa in such a way that the hole 1aa cannot be made bigger by birds or other wildlife. The reinforcement 3 attaches to the nesting box enclosure 1 in the process of erecting the enclosure 1.

The reinforcement 3 consists of one or more panels 3a, said panel 3a featuring one or more attachment elements 3ab. The reinforcement 3 has its attachment element 3ab made up by a bracket protruding at least partially from the panel 3a, as shown in figs. 2, 3, 4, 5 and 6. The figures demonstrate the way that the reinforcement 3 has its attachment element 3ab consisting of a rectangular bracket which proceeds into the seat 1ha, which is present in the enclosure and in the form of a rectangular slot. The figures demonstrate that the reinforcement 3 has such external dimensions that there is no chance for the reinforcement 3 to disengage from its position when the enclosure 1 is in an assembled condition. The permanence of the reinforcement 3 can be ensured by the locking members 2 the same way as the integrity of the enclosure 1.

The reinforcement 3 is most preferably made of hardboard, preferably wood fiber board, wood, plastic or metal.

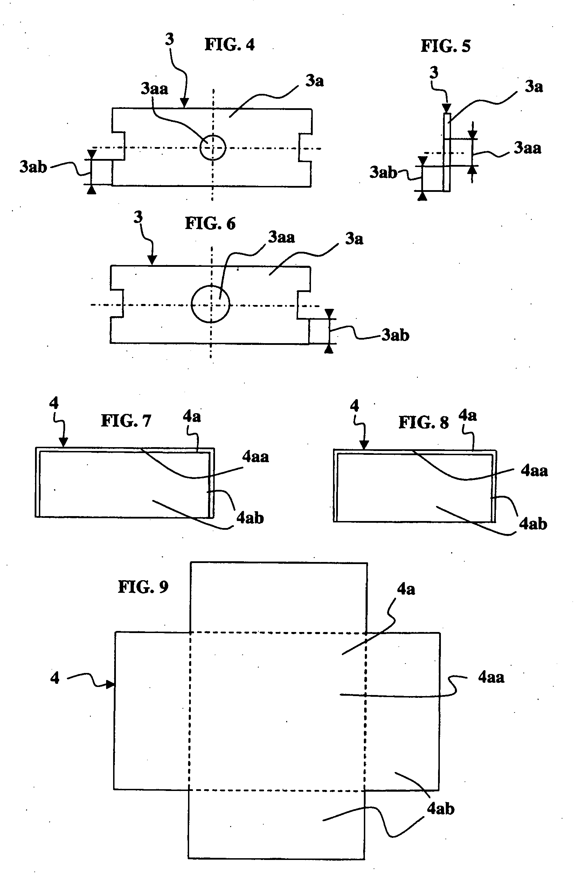

Figs. 4 and 6 illustrate reinforcements with unequal size holes 3aa, intended for separate bird species. The reinforcements in figs. 4 and 6 are of equal size and shape in terms of the external dimensions thereof, the nesting box being provided with several interchangeable reinforcements 3 with unequal size holes 3aa for various bird species, as a result of which the choice of a reinforcement 3 is a means for determining a bird species for which the nesting box is suitable as a nesting place. The flight hole 3aa of the reinforcement 3 is equal or smaller in size with respect to the flight hole 1aa of the enclosure 1.

It is indicated in figs. 2 and 3 that the nesting box includes one or more reducers 4 for making the nesting box internal volume smaller, thus enabling the use of one and the same nesting box as a nesting place for various bird species by varying the internal dimensions of a nesting box by means of the reducer 4. The illustrated reducer 4 consists of a foldable panel 4a.

The nesting box can be fabricated by prior known methods and machines.

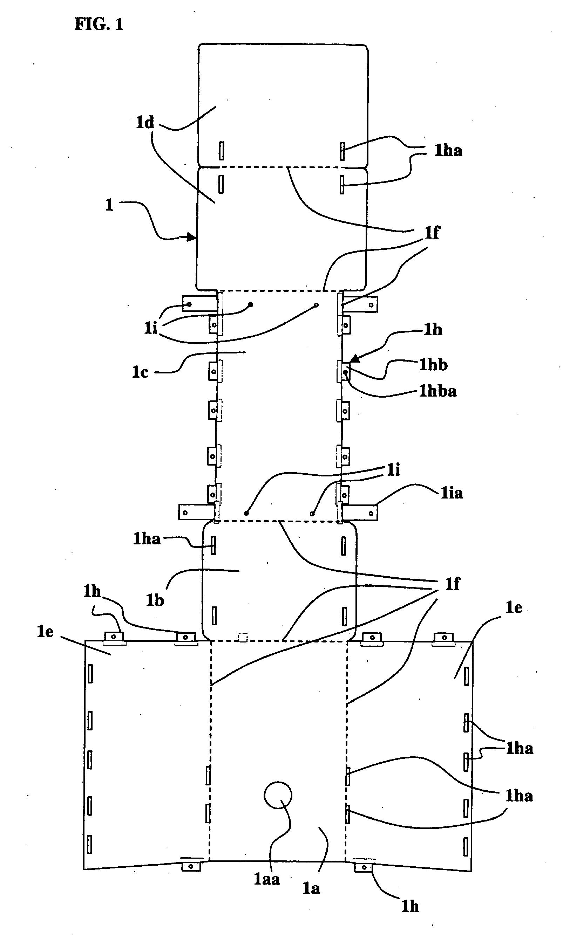

The nesting box is attached to a tree e.g. by means of a string or a metal wire. For attachment, the enclosure 1 is provided at its rear wall 1c with suspension elements 1i, which in figs. 1, 2 and 3 are in the form of holes for easily threading the above-mentioned string or wire therethrough. In the figures, the nesting box enclosure 1 is also provided with a bracket 1ia, which is foldable by creasing inside the enclosure 1, the bracket 1ia featuring a suspension element 1i or a hole, which will coincide with the above-mentioned hole in the suspension element 1ia of the enclosure 1.

It can be appreciated from the foregoing disclosure how the invented nesting box makes an excellent innovation, the bird enthusiast being able to carry along into the woods as many as a hundred nesting boxes at a time, ensuring a solid avian population even in otherwise poor nesting regions. The thickness and treatment of a material used for the nesting box enclosure 1 enable determining the longevity of a nesting box, even over several years, while in terms of cleaning the most convenient way is to fabricate enclosures 1 which last a single nesting season, the box being always replaced before the start of a new nesting season or after the nesting is over, while also gathering information about the nesting of birds. Used boxes can be burned, e.g. in a small campfire on site, thus avoiding the need of carrying them away from woods. The enclosure 1 can be coloured or patterned over its exterior or interior with prior known technique, e.g. the exterior can be patterned with birch-bark motifs and colours for giving the nesting box a sort of camouflage and averting vandalism thereto. Of course, other colours are also possible, e.g. colours typical of the nesting bird species.

It is obvious for a person skilled in the art that the invention is not limited just to foregoing options, but that many variants are feasible within the inventive concept defined in the appended claims. Regarding the variants, it can be noted, among other things, that the nesting box may have a shape which is other than that shown in the figures, being e.g. circular, elliptical, polygonal (e.g. 3-12 angular).

## Claims

1. A nesting box for use as a nesting place for birds, said nesting box comprising one or more enclosures (1), said enclosure (1) including one or more folding lines (1f) whereby the nesting box is at least partially foldable, and that the enclosure (1) features one or more holes (1aa) for a bird to enter into and exit from the nesting box, the enclosure (1) being erectable by means of fastening elements (1h), including fasteners (1hb) which protrude from the enclosure (1) and are lockable by means of elongate locking members (2), **characterized in that** the fasteners (1hb) are provided with locking holes (1hba) for the locking members (2), that the enclosure (1) is provided with slots (1ha), which constitute a part of the fastening elements (1h) and in which the fasteners (1hb) fit in such a way that the locking holes (1hba) present therein are left within the material thickness of the enclosure (1), and that the locking members (2) are set in positions such as to place themselves within the enclosure's (1) material which has its plane in longitudinal direction of the locking members (2).

2. A nesting box as set forth in claim 1, **characterized in that** the locking members (2) are sticks which in an assembled nesting box, constructed from corrugated board, are located in air voids created by the undulations of corrugated board.

3. A nesting box as set forth in claim 1 or 2, **characterized in that** the locking members (2) holding the enclosure (1) together are placed horizontally when the nesting box is in a nesting position, whereby the locking members (2) are well capable of retaining their positions, not being able to fall off as a result of gravity.

4. A nesting box as set forth in claim 2 or 3, **characterized in that** the locking member (2) is a twig, a toothpick or a match.

5. A nesting box as set forth in any of claims 1-4, **characterized in that** the fasteners (1hb) are tabs or lugs, which protrude from the enclosure and which consist of the same material as the enclosure (1).

6. A nesting box as set forth in any of claims 1-5, **characterized in that** inside the box is fitted a separate reinforcement panel (3) defining the size of a flight hole (3aa).

7. A nesting box as set forth in any of claims 1-6, **characterized in that** the enclosure (1) consists of a single panel-like element, from whose edges protrude the fasteners (1hb) in the form of tabs or lugs.

8. A nesting box as set forth in claim 7, **characterized in that** the enclosure (1) is made from a single elongated panel of corrugated board, which features for crosswise and two lengthwise folding creases (1f).

## Patentansprüche

1. Nistkasten zum Gebrauch als Nistplatz für Vögel, der Nistkasten umfassend eine oder mehrere Einfassungen (1), wobei die Einfassung (1) eine oder mehrere Falzlinien (1f) beinhaltet, wodurch der Nistkasten zumindest teilweise faltbar ist, und wobei die Einfassung (1) eine oder mehrere Löcher (1aa) aufweist, durch die ein Vogel in den Nistkasten eindringen und daraus ausdringen kann, wobei die Einfassung (1) mithilfe von Befestigungselementen (1h) errichtbar ist, die Befestigungen (1hb) beinhalten, die von der Einfassung (1) vorstehen und mithilfe von gestreckten Sperrgliedern (2) sperrbar sind, **dadurch gekennzeichnet, dass** die Befestigungen (1hb) mit Sperrlöchern (1hba) für die Sperrglieder (2) versehen sind, dass die Einfassung (1) mit Schlitzen (1ha) versehen ist, die einen Teil der Befestigungselemente (1h) bilden und in die die Befestiger (1hb) derart passen, dass die Sperrlöcher (1hba), die darin vorhanden sind, innerhalb der Materialstärke der Einfassung (1) belassen sind, und dass die Sperrglieder (2) in Positionen eingerichtet sind, um sich innerhalb des Materials der Einfassung (1) anzuordnen, dessen Ebene in Längsrichtung der Sperrglieder (2) verläuft.

2. Nistkasten nach Anspruch 1, **dadurch gekennzeichnet, dass** die Sperrglieder (2) Stäbe sind, die sich in einem zusammengebauten Nistkasten, der aus Wellpappe gebaut ist, in Luftporen befinden, die durch die Wellen der Wellpappe erzeugt sind.

3. Nistkasten nach einem der Ansprüche 1 oder 2, **dadurch gekennzeichnet, dass** die Sperrglieder (2), die die Einfassung (1) zusammenhalten, horizontal angeordnet sind, wenn sich der Nistkasten in einer Nistposition befindet, wobei die Sperrglieder (2) durchaus imstande sind, ihre Positionen zu behalten und nicht infolge der Schwerkraft abzufallen.

4. Nistkasten nach einem der Ansprüche 2 oder 3, **dadurch gekennzeichnet, dass** das Sperrglied (2) ein Zweig, ein Zahnstocher oder ein Streichholz ist.

5. Nistkasten nach einem der Ansprüche 1 bis 4, **dadurch gekennzeichnet, dass** die Befestiger (1hb) Klappen oder Ansätze sind, die von der Einfassung vorstehen und aus demselben Material wie die Einfassung (1) bestehen.

6. Nistkasten nach einem der Ansprüche 1 bis 5, **dadurch gekennzeichnet, dass** innerhalb des Kastens eine separate Verstärkungstafel (3) eingepasst ist, die die Größe eines Fluglochs (3aa) definiert.

7. Nistkasten nach einem der Ansprüche 1 bis 6, **dadurch gekennzeichnet, dass** die Einfassung (1) aus einem einzelnen tafelartigen Element besteht, von dessen Kanten die Befestiger (1hb) in Form von Klappen oder Ansätzen vorstehen.

8. Nistkasten nach Anspruch 7, **dadurch gekennzeichnet, dass** die Einfassung (1) aus einer einzelnen gestreckten Tafel aus Wellpappe hergestellt ist, die vier kreuzweise und zwei längs verlaufende Falzkniffe (1f) aufweist.

## Revendications

1. Nichoir destiné à être utilisé comme lieu de nichage pour oiseaux, ledit nichoir comprenant une ou plusieurs enceinte(s) (1), ladite enceinte (1) comprenant une ou plusieurs ligne(s) de pliage (1f) par laquelle/lesquelles le nichoir peut être au moins partiellement pliable, et sachant que l'enceinte (1) présente un ou plusieurs trou(s) (1aa) pour qu'un oiseau puisse entrer et sortir du nichoir, sachant que l'enceinte (1) peut être érigée au moyen d'éléments de fixation (1h) comprenant des fixations (1hb) qui font saillie de l'enceinte (1) et qui peuvent être verrouillées au moyen d'éléments de verrouillage allongés (2), **caractérisé en ce que** les fixations (1hb) sont munies de trous de verrouillage (1hba) pour les éléments de verrouillage (2), que l'enceinte (1) est munie de fentes (1ha) qui constituent une partie des éléments de fixation (1h) et dans lesquelles les fixations (1hb) s'insèrent de telle manière que les trous de verrouillage (1hba) présents dedans reposent dans l'épaisseur de matériau de l'enceinte (1), et que les éléments de verrouillage (2) sont placés dans des positions de manière à se placer à l'intérieur du matériau de l'enceinte (1) dont le plan est en direction longitudinale des éléments de verrouillage (2).

2. Nichoir selon la revendication 1, **caractérisé en ce que** les éléments de verrouillage (2) sont des batonnets, qui dans un nichoir assemblé construit en carton ondulé, sont placés dans des espaces vides créés par les ondulations du carton ondulé.

3. Nichoir selon la revendication 1 ou 2, **caractérisé en ce que** les éléments de verrouillage (2) maintenant l'enceinte (1) sont placés horizontalement lorsque le nichoir est dans une position de nichage, sachant que les éléments de verrouillage (2) sont tout à fait capables de maintenir leurs positions et ne peuvent pas tomber du fait de la gravité.

4. Nichoir selon la revendication 2 ou 3, **caractérisé en ce que** l'élément de verrouillage (2) est une brindille, un cure-dent ou une allumette.

5. Nichoir selon l'une quelconque des revendications 1 à 4, **caractérisé en ce que** les fixations (1hb) sont des pattes ou des tenons qui font saillie de l'enceinte et qui sont réalisés dans le même matériau que l'enceinte (1).

6. Nichoir selon l'une quelconque des revendications 1 à 5, **caractérisé en ce qu'**à l'intérieur du nichoir, un panneau de renfort séparé (3) est fixé qui définit la taille d'un trou d'envol (3aa).

7. Nichoir selon l'une quelconque des revendications 1 à 6, **caractérisé en ce que** l'enceinte (1) consiste en un seul élément de type panneau depuis les bords duquel des fixations (1hb) font saillie sous la forme de pattes ou de tenons.

8. Nichoir selon la revendication 7, **caractérisé en ce que** l'enceinte (1) est fabriquée d'un seul panneau allongé de carton ondulé qui présente quatre nervures de pliage transversales et deux longitudinales (1f).
